Europäisches Patentamt

European Patent Office

Office européen des brevets

(11) Veröffentlichungsnummer: **0 382 844**

**A1**

(12) **EUROPÄISCHE PATENTANMELDUNG**
veröffentlicht nach Art. 158 Abs. 3
EPÜ

(21) Anmeldenummer: **88906224.6**

(22) Anmeldetag: **20.05.88**

(86) Internationale Anmeldenummer:
**PCT/SU88/00112**

(87) Internationale Veröffentlichungsnummer:
**WO 89/11651 (30.11.89 89/28)**

(51) Int. Cl.5: **G01N 29/04**

(43) Veröffentlichungstag der Anmeldung:
**22.08.90 Patentblatt 90/34**

(84) Benannte Vertragsstaaten:
**DE FR GB IT SE**

(71) Anmelder: **MOSKOVSKOE VYSSHEE TEKHNICHESKOE UCHILISCHE IMENI N.E.BAUMANA**
**ul. 2-ya Baumanskaya, 5**
**Moscow, 107005(SU)**

(72) Erfinder: **ALESHIN, Nikolai Pavlovich**
**ul. 15 Parkovaya, 18-1-109**
**Moscow, 105074(SU)**
Erfinder: **BARANOV, Vladimir Jurievich**
**Schelkovskoe shosse, 58-2-17**
**Moscow, 105215(SU)**
Erfinder: **MOGILNER, Leonid Jurievich**
**derevnya Ivakino, 27/2-11 Khimkinsky raion**
**Moskovskaya obl., 141400(SU)**
Erfinder: **YAROVOI, Alexandr Alexeevich**
**pr. Mira, 25-48**
**Nikolaev, 327056(SU)**

(74) Vertreter: **Patentanwälte Zellentin & Partner**
**Zweibrückenstrasse 15**
**D-8000 München 2(DE)**

(54) **VERFAHREN ZUR ULTRASCHALLKONTROLLE DER SCHWEISSNÄHTE VON GEGENSTÄNDEN.**

(57) Beim Verfahren zur Ultraschallkontrolle von Schweissnähten an Erzeugnissen werden die Polarisationsebenen (3,8) der in die Schweissnaht (4) eines Erzeugnisses (2) eingestrahlten Ultraschall-Transversalschwingungen und dieser nach Reflexion an der spiegelnden Fläche eines Defekts (6) der Schweissnaht (4) registrierten Schwingungen in Bezug aufeinander unter einem vorgegebenen Winkel $2\delta$ angeordnet, wobei man den Winkel $\xi_1$ zwischen der Polarisationsebene (3) und der Einfallsebene (5) der Ultraschallshwingungen auf der reflektierenden Fläche und den Winkel $\xi_2$ zwischen der Polarisationsebene (8) und der Einfallsebene (5) gleich $70°$ wählt und dadurch von den ausgestrahlten Ultraschallschwingungen die Abtrennung ihrer in Bezug auf die reflektierende Fläche des Defekts (6) horizontal polarisierten Komponenten gewährleistet, nach deren Amplitude die geometrischen Parameter des

Defekts beurteilt werden und nach deren Registrierungszeit die Lage des Defekts (6) in der Schweissnaht (4) bestimmt wird.

FIG. 1

# VERFAHREN ZUR ULTRASCHALLKONTROLLE VON SCHWEISSNÄHTEN AN ERZEUGNISSEN

## Gebiet der Technik

Die Erfindung bezieht sich auf Verfahren zur zerstörungsfreien Prüfung von Erzeugnissen, insbesondere auf Verfahren zur Ultraschallkontrolle von Schweissnähten an Erzeugnissen.

## Stand der Technik

Bei einem bekannten Verfahren zur Ultraschallkontrolle von Schweissnähten an Erzeugnissen wählt man parallel verlaufende Richtungen der in ein Erzeugnis eingestrahlten transversalen Ultraschallschwingungen sowie die Richtungen der von der Reflexionsfläche des Schweissnahtdefekts am Erzeugnis und von der Erzeugnisoberfläche spiegelnd reflektierten transversalen Ultraschallschwingungen, wobei diese Richtungen in den Polarisationsebenen der ausgestrahlten und der reflektierten Ultraschall-Transversalschwingungen liegen, die miteinander und mit der Einfallsebene dieser Schwingungen auf der reflektierenden Defektfläche der Schweissnaht am Erzeugnis koinzidieren, worauf man die Ultraschall-Transversalschwingungen ins Erzeugnis einstrahlt und die von der Reflexionsfläche des Defekts und von der Erzeugnisoberfläche reflektierten Ultraschall-Transversalschwingungen registriert, nach denen man über die geometrischen Parameter des Defekts urteilt (SU, A, 461361).

Bei diesem Verfahren fallen auf die spiegelnde Defektfläche die in Bezug auf diese Fläche vertikal polarisierten Transversalschwingungen. Diese Schwingungen werden in andere Schwingungstypen, z. B. in Longitudinalschwingungen umgewandelt, wenn ihr Einfallswinkel auf der reflektierenden Defektfläche nahe dem dritten kritischen Anstellwinkel liegt oder kleiner als dieser ist. Dabei verringert sich stark der Reflexionsfaktor der Transversalschwingungen an der reflektierenden Defektfläche und steigen gleichzeitig die von anderen Ultraschallschwingungsarten erzeugten Störungen an.

Infolgedessen sind die Empfindlichkeit und die Störfestigkeit beim erwähnten Verfahren niedrig. Dies tritt z. B. bei Kontrolle von Schweissnähten an Erzeugnissen mit kleinerer Dicke (unter 30 mm) in Erscheinung.

Ausser der niedrigen Empfindlichkeit und der Störanfälligkeit dieses Verfahrens ist dabei auch die Tatsache nachteilig, dass bei Realisierung des Verfahrens zur Kontrolle von Schweissnähten unter 30 mm Dicke die zur Ausstrahlung und zur Registrierung von Ultraschallschwingungen bestimmten piezoelektrischen Wandler auf der Erzeugnisoberfläche in unmittelbarer Nähe voneinander angeordnet werden müssen, was aber wegen der geometrischen Abmessungen dieser Wandler nicht immer gelingt.

Es ist auch ein Verfahren zur Ultraschallkontrolle von Schweissnähten an Erzeugnissen bekannt, bei dem zunächst die Richtung der Einstrahlung von Ultraschall- -Transversalschwingungen in ein Erzeugnis, die Polarisationsebene der in die Schweissnaht des Erzeugnisses eingestrahlten transversalen Ultraschallschwingungen, ihre Einfallsebene auf der spiegelnden Defektfläche der Schweissnaht am Erzeugnis, die Richtung der spiegelnden Reflexion dieser Schwingungen an der Reflexionsoberfläche des Schweissnahtdefekts am Erzeugnis und die Polarisationsebene der nach der spiegelnden Reflexion an der reflektierenden Oberfläche des Schweissnahtdefekts registrierten transversalen Ultraschallschwingungen bestimmt werden, worauf man die Ultraschall-Transversalschwingungen in das Erzeugnis periodisch einstrahlt und die an der spiegelnden Defektsfläche der Schweissnaht reflektierten Ultraschall-Transversalschwingungen registriert, nach denen man die geometrischen Parameter des Defekts beurteilt (SU, A, 855487).

Bei diesem Verfahren enthalten die in das Erzeugnis eingestrahlten Ultraschall-Transversalschwingungen Komponenten, die in Bezug auf die reflektierende Defektfläche am Erzeugnis sowohl vertikal, als auch horizontal polarisiert sind. Dies kommt zustande, weil die Richtungen der Ausstrahlung und der spiegelnden Reflexion der Ultraschall-Transversalschwingungen in Bezug auf die zur Längsachse der Schweissnaht senkrecht gerichtete und den Defekt schneidende Ebene symmetrisch liegen.

Das Verhältnis der Amplituden dieser Komponenten ist so, dass die vertikal polarisierte Komponente grösser ist. Dies führt zur Herabsetzung der Amplitude der am Defekt reflektierten Transversalschwingungen, zur Vergrösserung der Amplitude der durch Umwandlung entstehenden Longitudinalschwingungen und infolgedessen zur Verringerung der Empfindlichkeit und der Störfestigkeit der Ultraschallkontrolle, d.h. zur Herabsetzung ihrer Glaubwürdigkeit.

Das beschriebene Verfahren kann zur Ultraschallkontrolle von Rohren mit Durchmessern über 100 mm sowie von flachen Elementen nicht angewandt werden, da in diesem Falle die erforderlichen Ausstrahlungs- und Registrierungsrichtungen der Ultraschallschwingungen nach diesem Verfahren nicht realisiert werden können.

Der Erfindung liegt die Aufgabe zugrunde, ein Verfahren zur Ultraschallkontrolle von Schweissnähten an Erzeugnissen zu entwickeln, bei dem die Polarisationsebenen der in die Schweissnaht eines Erzeugnisses eingestrahlten Ultraschall-Transversalschwingungen und dieser nach der Reflexion an der spiegelnden Defektfläche der Schweissnaht des Erzeugnisses zu registrierenden Ultraschallschwingungen so liegen, dass in den an der Reflexionsfläche des Defekts spiegelnd reflektierten Schwingungen die Absonderung jener Komponenten möglich wird, die eine höhere Empfindlichkeit und Störfestigkeit der Ultraschallkontrolle von Schweissnähten einer erweiterten Klasse von kontrollierbaren Erzeugnissen ergeben, d.h. zur höheren Glaubwürdigkeit dieser Kontrolle beitragen, wobei die erweiterte Klasse von Erzeugnissen auch Rohre mit Durchmessern über 100 mm sowie flache Elemente einschliessen soll.

Dies wird dadurch erreicht, dass beim Verfahren zur Ultraschallkontrolle von Schweissnähten an Erzeugnissen zunächst die Richtung der Einstrahlung von Ultraschall-Transversalschwingungen in ein Erzeugnis, die Polarisationsebene der in die Schweissnaht des Erzeugnisses eingestrahlten Ultraschall-Transversalschwingungen, ihre Einfallsebene auf der spiegelnden Defektfläche der Schweissnaht am Erzeugnis, die Richtung der spiegelnden Reflexion dieser Schwingungen an der Reflexionsfläche des Schweissnahtdefekts am Erzeugnis und die Polarisationsebene der nach der spiegelnden Reflexion an der reflektierenden Fläche des Schweissnahtdefekts registrierten Ultraschall-Transversalschwingungen bestimmt werden, worauf man die Ultraschall--Transversalschwingungen in das Erzeugnis periodisch einstrahlt und die an der spiegelnden Defektfläche der Schweissnaht reflektierten Ultraschall-Transversalschwingungen registriert, nach denen die geometrischen Parameter des Schweissnahtdefekts beurteilt werden, - die Polarisationsebenen der ins Erzeugnis einzustrahlenden Ultraschall-Transversalschwingungen und dieser nach der Reflexion an der spiegelnden Schweissnaht-Defektfläche am Erzeugnis registrierten Ultraschallschwingungen erfindungsgemäss vor der periodischen Einstrahlung der Ultraschall-Transversalschwingungen ins Erzeugnis in Bezug aufeinander unter einem vorgegebenen Winkel $2\delta$ angeordnet werden, wobei man den Winkel $\xi_1$ zwischen der Polarisationsebene der in die Schweissnaht des Erzeugnisses eingestrahlten Ultraschall-Transversalschwingungen und der Einfallsebene dieser Ultraschallschwingungen auf der reflektierenden Defektfläche der Schweissnaht sowie den Winkel $\xi_2$ zwischen der Polarisationsebene der nach der Reflexion an der spiegelnden Defektfläche der Schweissnaht am Erzeugnis registrierten Ultraschall-Transversalschwingungen und der Einfallsebene dieser Ultraschallschwingungen auf der reflektierenden Fläche des Schweissnahtdefekts gleich oder grösser als 64°, aber kleiner als 90° wählt und dadurch die Abtrennung der in Bezug auf die reflektierende Defektfläche horizontal polarisierten Komponente von den ausgestrahlten Ultraschall-Transversalschwingungen gewährleistet, wobei die geometrischen Parameter des Defekts, nämlich seine geometrischen Abmessungen nach der Amplitude der horizontal polarisierten Komponente und die Lage des Defekts in der Schweissnaht nach der Registrierungszeit dieser Komponente beurteilt werden.

Es ist vorteilhaft, den Winkel $2\delta$ zwischen den Polarisationsebenen der in die Schweissnaht des Erzeugnisses eingestrahlten Ultraschall-Transversalschwingungen und diesen nach der Reflexion an der spiegelnden Defektfläche der Schweissnaht am Erzeugnis registrierten Ultraschallschwingungen zu bestimmen, indem die Richtungen der in das Erzeugnis eingestrahlten Ultraschall-Transversalschwingungen und der spiegelnden Reflexion dieser Ultraschallschwingungen an der reflektierenden Fläche des Schweissnahtdefekts am Erzeugnis ausserhalb der Ebene gewählt werden, die zur Längsachse der Schweissnaht am Erzeugnis senkrecht liegt und durch die reflektierende Fläche des Schweissnahtdefekts hindurchgeht.

Im Falle der Ultraschallkontrolle von Schweissnähten an Erzeugnissen mit ebener Oberfläche, durch welche die Einstrahlung der Ultraschall-Transversalschwingungen ins Erzeugnis erfolgt und diese Schwingungen nach ihrer Reflexion an der spiegelnden Fläche des Schweissnahtdefekts am Erzeugnis registriert werden, sowie mit einer dieser Oberfläche entgegengesetzt liegenden Fläche von beliebiger Form, ist es erwünscht, dass der Winkel $\xi_1$ zwischen der Polarisationsebene der in die Schweissnaht des Erzeugnisses eingestrahlten Ultraschall-Transversalschwingungen und der Einfallsebene dieser Ultraschallschwingungen auf der reflektierenden Schweissnaht-Defektfläche sowie der

Winkel $\xi_2$ zwischen der Polarisationsebene der nach der Reflexion an der spiegelnden Schweissnaht-Defektfläche am Erzeugnis registrierten Ultraschall-Transversalschwingungen und der Einfallsebene dieser Ultraschallschwingungen auf der reflektierenden Schweissnaht-Defektfläche einander gleich sind ( $\xi_1 = \xi_2 = \xi$ ) und der Winkel $2\delta$ zwischen den Polarisationsebenen der in die Schweissnaht des Erzeugnisses eingestrahlten Ultraschall-Transversalschwingungen und dieser nach der Reflexion an der spiegelnden Fläche des Schweissnahtdefekts am Erzeugnis registrierten Ultraschallschwingungen in Übereinstimmung mit den Beziehungen

$$2\delta = arc\ cos\ \frac{1}{\sqrt{1 + cos^2\alpha\ \cdot\ tg^2\xi}}$$

oder

$$2\delta = arc\ sin\ \frac{1}{\sqrt{1 + cos^2\alpha\ \cdot\ tg^2\xi}}$$

gewählt wird.

Dabei bedeutet $\alpha$ den Winkel zwischen der Richtung der Einstrahlung von Ultraschall-Transversalschwingungen ins Erzeugnis und der Normale zur erstgenannten Erzeugnisoberfläche, der gleich dem Winkel zwischen der Richtung der spiegelnden Reflexion dieser Ultraschallschwingungen an der reflektierenden Defektfläche der Schweissnaht und der Normale zur erstgenannten Erzeugnisoberfläche ist.

Die Durchführung des angemeldeten Verfahrens zur Ultraschallkontrolle von Schweissnähten an Erzeugnissen gewährleistet eine höhere Empfindlichkeit und Störfestigkeit dieses Verfahrens infolge der Registrierung derjenigen Komponente der auf die reflektierende Fläche des Schweissnahtdefekts am Erzeugnis einfallenden Ultraschall-Transversalschwingungen, die in Bezug auf diese Fläche horizontal polarisiert ist. Dies führt zur Vergrösserung der Amplitude der von der reflektierenden Defektfläche gespiegelten Ultraschall-Transversalschwingungen und zur Herabsetzung der Amplitude der Ultraschallschwingungen, die an der reflektierenden Defektfläche umgewandelt werden und Ultraschallgeräusche erzeugen. Im Ergebnis wird die Glaubwürdigkeit der Defekterkennung bei der Ultraschallkontrolle von Schweissnähten an Erzeugnissen erhöht. Dies ist besonders für die Erkennung von voluminösen Schweissnahtdefekten an Erzeugnissen wie Poren oder Schlackeneinschlüssen wichtig.

Ausserdem gibt das angemeldete Verfahren zur Ultraschallkontrolle von Schweissnähten an Erzeugnissen die Möglichkeit, den Schweissnahtdefekt am Erzeugnis von verschiedenen Seiten zu beschallen und durch Vergleich der Amplituden der an der reflektierenden Defektfläche in verschiedenen Richtungen gespiegelten Ultraschallschwingungen die Form des Defekts zu bestimmen, d.h. die Defekte in voluminöse und flächenhafte einzuteilen sowie ihre Orientierung in der Schweissnaht des Erzeugnisses zu erkennen.

Das erfindungsgemäss entwickelte Verfahren zur Ultraschallkontrolle von Schweissnähten an Erzeugnissen ermöglicht die Bestimmung von optimalen Parametern der Ultraschallkontrolle von Erzeugnissen, darunter von Erzeugnissen mit einer Dicke unter 30 mm, weil der Winkel $2\delta$ zwischen den Polarisationsebenen der ausgestrahlten und der registrierten Ultraschallschwingungen nicht gleich Null gewählt wird. Dadurch wird die Anordnung der Piezowandler auf der Oberfläche der zu kontrollierenden Erzeugnisse, darunter auch der Rohre mit Durchmessern über 100 mm und flacher Elemente möglich.

Die Erfindung wird durch die nachstehende Beschreibung konkreter Beispiele ihrer Ausführung und anhand von Zeichnungen näher erläutert. Hierbei zeigen

Fig. 1 ein Gesamtschema einer Einrichtung in axonometrischer Darstellung, die das Verfahren zur Ultraschallkontrolle von Schweissnähten an Erzeugnissen gemäss der Erfindung realisiert;

Fig. 2 dasselbe wie in Fig. 1 (Draufsicht in verkleinertem Masstab);

Fig. 3 dasselbe wie in Fig. 1 (Vorderansicht, verkleinerter Maßstab);

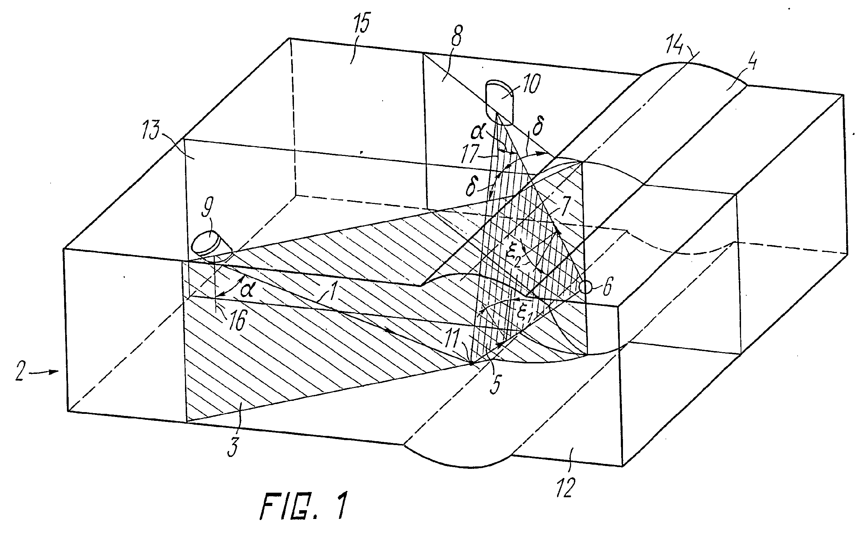

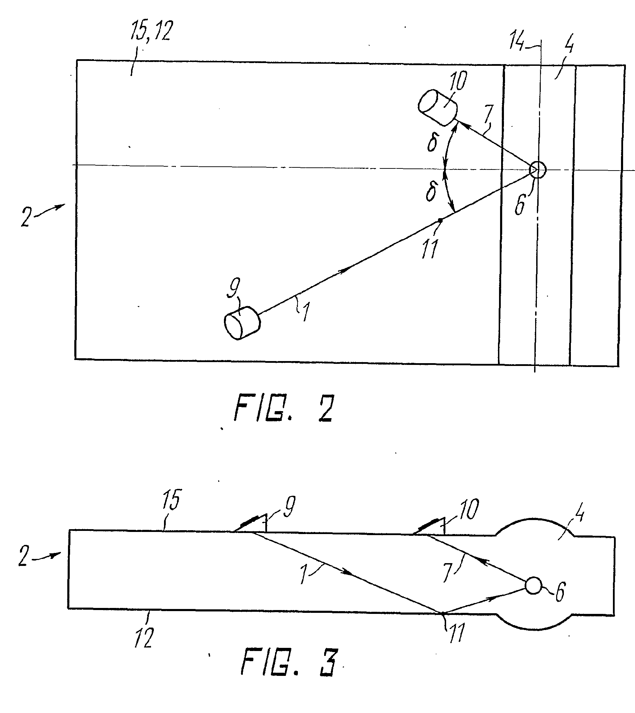

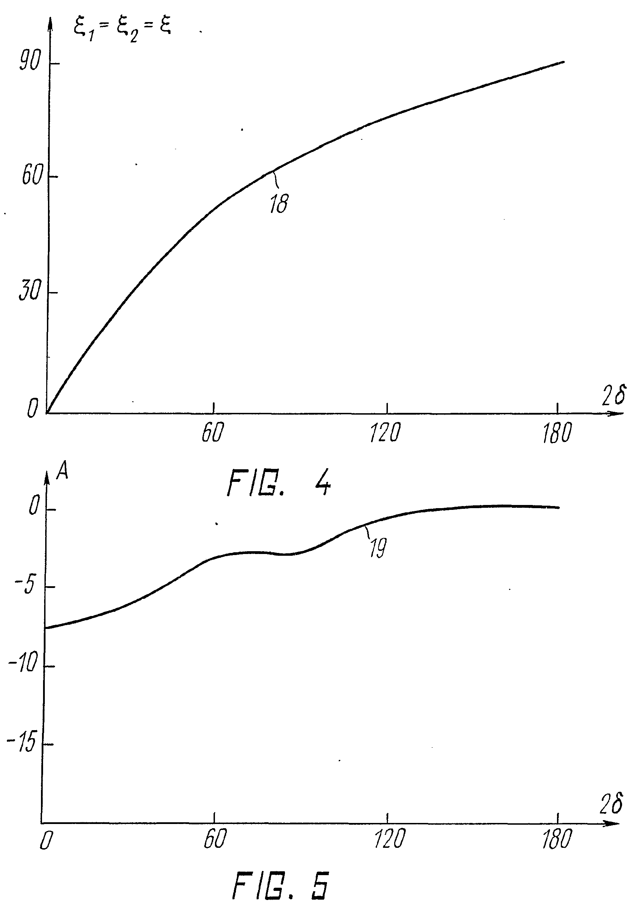

Fig. 4 ein mittels der Einrichtung nach Fig. 1 — 3 aufgenommenes Diagramm der Abhängigkeit des Winkels $\xi_1$ zwischen der Polarisationsebene der in die Schweissnaht des Erzeugnisses eingestrahlten Ultraschall-Transversalschwingungen und der Einfallsebene dieser Schwingungen auf der reflektierenden Defektfläche (oder des gleich grossen Winkels $\xi_2$ zwischen der Polarisationsebene der Ultraschallschwingungen nach ihrer Reflexion an der spiegelnden Defektfläche und der Einfallsebene dieser Ultraschallschwingungen auf der reflektierenden Defektfläche, d.h. der Winkel $\xi_1 = \xi_2 = \xi$ ) vom Winkel $2\delta$ zwischen den Polarisationsebenen der in die Schweissnaht des Erzeugnisses eingestrahlten und der an der reflektierenden Defektfläche gespiegelten Ultraschall-Transversalschwingungen;

Fig. 5 ein mit der Einrichtung nach Fig. 1 — 3 erhaltenes Diagramm der Abhängigkeit der Amplitude A der registrierten Ultraschallschwingungen vom Winkel $2\delta$;

Fig. 6 ein Gesamtschema der Einrichtung zur Ultraschallkontrolle von Schweissnähten an Erzeugnissen für die Realisierung einer anderen Ausführungsvariante des Verfahrens gemäss der Erfindung (Axonometrie);

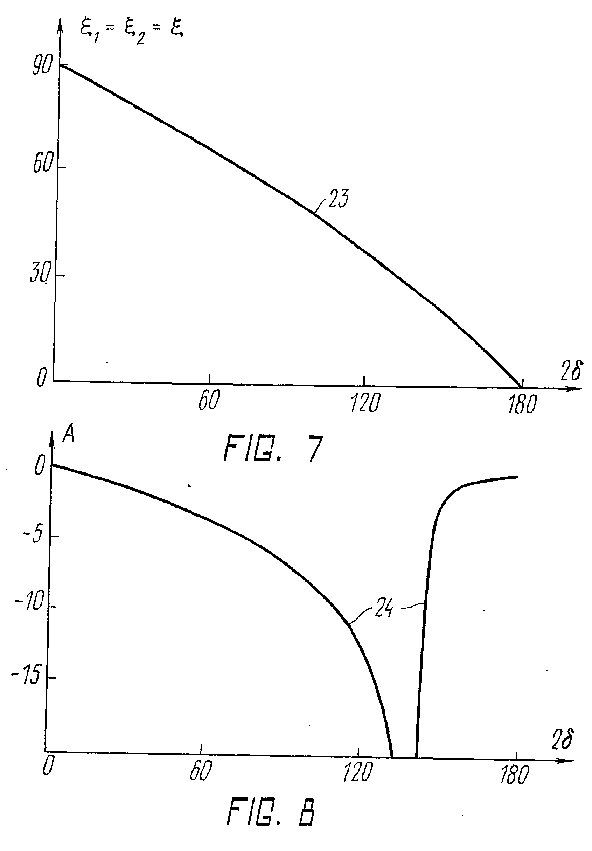

Fig. 7 ein mittels der Einrichtung nach Fig. 6 erhaltenes Diagramm der Abhängigkeit des Winkels $\xi_1$ zwischen der Polarisationsebene der in die Schweissnaht des Erzeugnisses eingestrahlten Ultraschall-Transversalschwingungen und der Einfallsebene dieser Schwingungen auf der reflektierenden Defektfläche (oder des gleich grossen Winkels $\xi_2$ zwischen der Polarisationsebene der Ultraschallschwingungen nach ihrer Reflexion an der reflektierenden Defektfläche und der Einfallsebene dieser Ultraschallschwingungen auf der reflektierenden Defektfläche, d.h. der Winkel $\xi_1 = \xi_2 = \xi$ ) vom Winkel $2\delta$ zwischen den Polarisationsebenen der in die Schweissnaht des Erzeugnisses eingestrahlten und der an der reflektierenden Defektfläche gespiegelten Ultraschall-Transversalschwingungen;

Fig. 8 ein mit der Einrichtung nach Fig. 6 erhaltenes Diagramm der Abhängigkeit der Amplitude A der registrierten Ultraschallschwingungen vom Winkel $2\delta$ :

Fig. 9 ein Gesamtschema der Einrichtung zur Ultraschallkontrolle von Schweissnähten an Erzeugnissen für die Realisierung einer weiteren Ausführungsvariante des Verfahrens gemäss der Erfindung (Axonometrie);

Fig. 10 dasselbe wie in Fig. 9 (Seitenansicht, vergrösserter Maßstab);

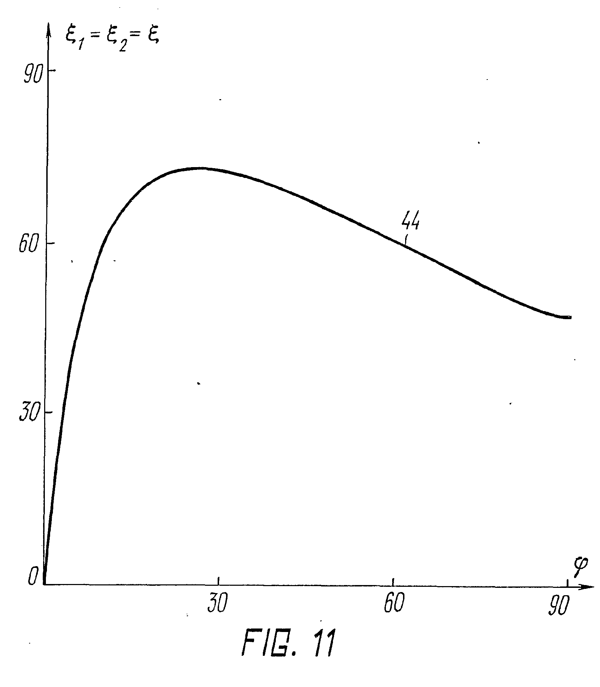

Fig. 11 ein Diagramm der Abhängigkeit des Winkels $\varphi$ zwischen dem durch den Reflexionspunkt der Ultraschallschwingungen an der Innenfläche des Erzeugnisses gezogenen Radiusvektor und dem durch den registrierenden Ultraschallwandler in der Projektion auf der Ebene der Zeichnung in Fig. 10 gezogenen Radiusvektor vom Winkel $\xi_1$ zwischen der Polarisationsebene der in die Schweissnaht des Erzeugnisses eingestrahlten Ultraschall--Transversalschwingungen und der Einfallsebene dieser Schwingungen auf der reflektierenden Defektfläche (oder vom gleich grossen Winkel $\xi_2$ zwischen der Polarisationsebene der nach der Reflexion an der spiegelnden Defektfläche registrierten Ultraschallschwingungen und der Einfallsebene dieser Ultraschallschwingungen auf der reflektierenden Fläche, d.h. von den Winkeln $\xi_1 = \xi_2 = \xi$ ).

Ausführungsformen der Erfindung

Das erfindungsgemäss entwickelte Verfahren zur Ultraschallkontrolle von Schweissnähten an Erzeugnissen besteht darin, dass zunächst die Richtung 1 (Fig. 1) der Einstrahlung von Ultraschall-Transversalschwingungen in ein Erzeugnis 2, die in der Zeichnung schraffierte Polarisationsebene 3 der in die Schweissnaht 4 des Erzeugnisses 2 eingestrahlten Ultraschall-
-Transversalschwingungen, die in der Zeichnung ebenfalls
schraffierte Einfallsebene 5 dieser Schwingungen auf
der spiegelnden Fläche des Schweissnahtdefekts 6 am
Erzeugnis 2, die Richtung 7 der spiegelnden Reflexion
dieser Schwingungen an der Reflexionsfläche des Schweissnahtdefekts 6 und die Polarisationsebene 8 der nach
der spiegelnden Reflexion an der reflektierenden Fläche
des Defekts 6 registrierten Ultraschall-Transversalschwingungen bestimmt werden. Es wird angenommen, dass das Erzeugnis 2 transparent ist.

Die Polarisationsebenen 3 und 8 der in die Schweissnaht 4 des Erzeugnisses 2 eingestrahlten und der nach
der Reflexion an der spiegelnden Fläche des Schweissnahtdefekts 6 registrierten Ultraschall-Transversalschwingungen werden in Bezug aufeinander unter dem
vorgegebenen Winkel $2\delta$ angeordnet. Dabei wählt man den
Winkel $\xi_1$ zwischen der Polarisationsebene 3 der in die
Schweissnaht 4 des Erzeugnisses 2 eingestrahlten Ultraschall-Transversalschwingungen und der Einfallsebene
dieser Ultraschallschwingungen auf der reflektierenden
Fläche des Schweissnahtdefekts 6 sowie den Winkel $\xi_2$
zwischen der Polarisationsebene 8 der nach der Reflexion an der spiegelnden Fläche des Schweissnahtdefekts 6 registrierten Ultraschall-Transversalschwingungen und der Einfallsebene 5 dieser Ultraschallschwingungen auf der spiegelnden Fläche des Defekts 6 gleich
oder grösser als 64°, aber kleiner als 90° und gewährleistet dadurch die Abtrennung der in Bezug auf die
reflektierende Defektfläche horizontal polarisierten
Komponente aus den ausgestrahlten Ultraschall-Transversalschwingungen.

Das Amplitudenverhältnis von horizontal und vertikal polarisierten Komponenten der auf die reflektierende Fläche des Defekts 6 einfallenden Ultraschall-
-Transversalschwingungen ist gleich tg $\xi_1$. Wenn also

der Winkel $\xi_1$ im angegebenen Bereich gewählt wird, ist das Amplitudenverhältnis der horizontal und der vertikal polarisierten Komponenten der auf die reflektierende Fläche des Defekts 6 einfallenden Ultraschall--Transversalschwingungen gleich zwei (6dB) oder mehr. Liegt dabei auch der Winkel $\xi_2$ im gleichen Bereich, so besteht die Möglichkeit, die erste Komponente unabhängig von der zweiten sicher herauszulösen.

Dann werden mittels des Ultraschallwandlers 9 (Fig. 1 - 3) Ultraschall-Transversalschwingungen ins Erzeugnis 2 periodisch eingestrahlt und mit Hilfe des Ultraschallwandlers 10 anfangs die vom Punkt 11 der Oberfläche 12 des Erzeugnisses 2 und darauf die an der reflektierenden Fläche des Defekts 6 der Schweissnaht 4 reflektierten Ultraschall-Transversalschwingungen registriert, nach denen man die geometrischen Parameter (geometrische Abmessungen, Lage) des Schweissnahtdefekts 6 am Erzeugnis 2 beurteilt.

Die geometrischen Abmessungen des Schweissnahtdefekts 6 erkennt man an der registrierten Amplitude der horizontal polarisierten Komponente, während die Lage des Defekts 6 in der Schweissnaht 4 auf Grund der Registrierungszeit dieser Amplitude bestimmt wird.

Den Winkel $2\delta$ (Fig. 1) zwischen den Polarisationsebenen 3 und 8 der in die Schweissnaht 4 des Erzeugnisses 2 eingestrahlten Ultraschall-Transversalschwingungen bzw. dieser nach der Reflexion an der spiegelnden Fläche des Schweissnahtdefekts 6 registrierten Schwingungen bestimmt man, indem man die Richtungen 1 und 7 der Einstrahlung der Ultraschall-Transversalschwingungen ins Erzeugnis 2 bzw. der spiegelnden Reflexion dieser Ultraschallschwingungen an der reflektierenden Fläche des Schweissnahtdefekts 6 ausserhalb der Ebene 13 wählt, die zur Längsachse 14 der Schweissnaht 4 senkrecht liegt und durch die reflektierende Fläche des Defekts 6 hindurchgeht.

Bei dieser Ausführungsvariante des Verfahrens gemäss der Erfindung wird der Ultraschallkontrolle ein Erzeugnis 2 (Fig. 1 - 3) mit ebener Oberfläche 15 unterzogen, durch welche die Ultraschall-Transversalschwingungen ins Erzeugnis 2 eingestrahlt und nach der Reflexion an der gegenüber liegenden Fläche 12 des Erzeugnisses 2 und an der spiegelnden Fläche des Schweissnahtdefekts 6 registriert werden. Die Fläche 12 kann beliebig geformt sein, hier ist sie parallel zur Oberfläche 15.

In diesem Falle verlaufen die Einstrahlungsrichtung 1 (Fig. 1) und die Reflexionsrichtung 7 der Ultraschall-Transversalschwingungen an je einer Seite der Ebene 13. Die Winkel $\xi_1$ und $\xi_2$ sind einander gleich ( $\xi_1 = \xi_2 = \xi$ ), während der Winkel $2\delta$ aus der Beziehung

$$2\delta = 2 \text{ arc cos } \frac{1}{\sqrt{1 + \cos^2\alpha \cdot \text{tg}^2 \xi}}$$

ermittelt wird. Dabei ist
$\alpha$ der Winkel zwischen der Richtung 1, in welcher die Einstrahlung der Ultraschall-Transversalschwingungen ins Erzeugnis 2 erfolgt, und der Normale 16 zur Oberfläche 15 des Erzeugnisses 2 und ist gleich dem Winkel $\alpha$ zwischen der Richtung 7 der spiegelnden Reflexion dieser Ultraschallschwingungen an der reflektierenden Fläche des Schweissnahtdefekts 6 und der Normale 17 zur Oberfläche 15.

Als Beispiel der Durchführung des angemeldeten Verfahrens wird nachstehend die Ermittlung eines als sphärische Pore auftretenden Defektes 6 (Fig. 1 - 3) in der Schweissnaht 4 eines aus Stahl gefertigten Erzeugnisses 2 für den Fall mit $\alpha$ = 70° betrachtet.

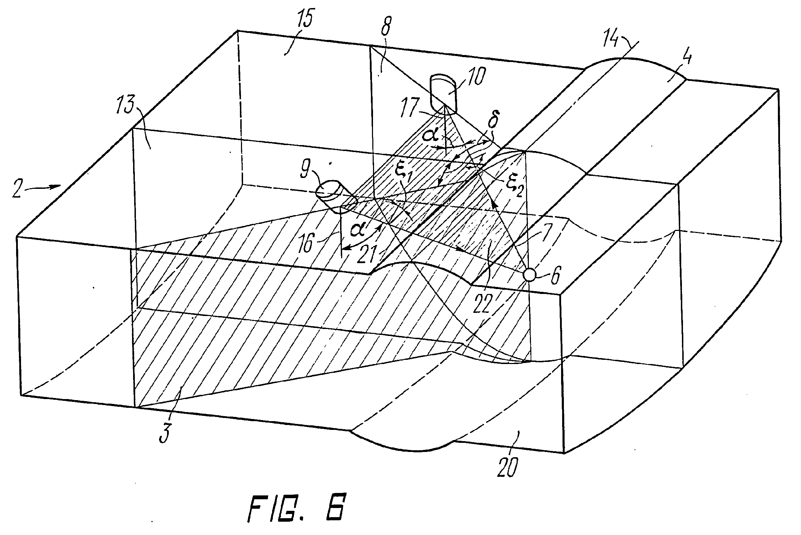

In Fig. 4 und 5 sind längs der Abszissenachse die Werte des Winkels $2\delta$ in Grad und auf der Ordinatenachse in Fig. 4 die Werte der Winkel $\xi_1 = \xi_2 = \xi$ in Grad aufgetragen. Auf der Ordinatenachse in Fig. 5 sind die Werte der Amplitude A der registrierten Ultraschall-Transversalschwingungen in dB aufgetragen.

In Übereinstimmung mit der Kurve 18 (Fig. 4), welche den Zusammenhang zwischen $\xi$ und $2\delta$ für den angegebenen Wert von $\alpha$ beschreibt, und bei der Wahl des Winkels $\xi$ nach dem angemeldeten Verfahren im Bereich von $64° \leqslant \xi < 90°$ wird der Winkel $2\delta$ im Bereich von $75° \leqslant 2\delta < 180°$ gewählt. Dabei ist die Amplitude der horizontal polarisierten Komponente der auf die reflektierende Fläche des Schweissnahtdefekts 6 am Erzeugnis 2 einfallenden Transversalschwingungen wenigstens zweimal (um 6 dB) höher als die Amplitude der vertikal polarisierten Komponente. Folglich liegt die Amplitude A der registrierten Ultraschall-Transversalschwingungen, wie dies die Kurve 19 (Fig. 5) zeigt, um 6 dB und mehr höher als die Amplitude der Ultraschall-Transversalschwingungen, die im Falle registriert werden, wenn $\xi = 0°$ $(2\delta = 0°)$ ist.

Nach einer anderen Ausführungsvariante des Verfahrens gemäss der Erfindung, die mittels der Einrichtung nach Fig. 6 realisiert wird, erfolgt die Ultraschallkontrolle der Schweissnaht 4 eines Erzeugnisses 2 mit ebener Oberfläche 15, durch welche die Ultraschall-Transversalschwingungen ins Erzeugnis 2 eingestrahlt und nach Reflexion an der spiegelnden Fläche des Schweissnahtdefekts 6 am Erzeugnis 2 registriert werden, wobei die der Erzeugnisoberfläche 15 entgegengesetzte Fläche 20 beliebig geformt sein kann, gegebenenfalls konvex ist. In diesem Falle wird das Verfahren gemäss der Erfindung ähnlich wie beim Verfahren durchgeführt, welches mittels der Einrichtung nach Fig. 1 - 3 realisiert wird.

Der Unterschied besteht nur darin, dass die durch die ebene Oberfläche 15 des Erzeugnisses 2 eingestrahlten Ultraschall-Transversalschwingungen sich in der Richtung 21 fortpflanzen und, ohne von der gegenüberliegenden Fläche 20 des Erzeugnisses 2 reflektiert zu werden, unmittelbar an der reflektierenden Fläche des Schweissnahtdefekts 6 des Erzeugnisses 2 gespiegelt werden. Nach Reflexion am Defekt 6 breiten sich die Ultraschallschwingungen in der Richtung 7 aus und werden vom Ultraschallwandler 10 registriert. Die Lage der Polarisationsebenen 3 und 8 der ins Erzeugnis 2 ausgestrahlten und der registrierten Ultraschallschwingungen bleibt unverändert, während die Lage der Einfallsebene 22 der Ultraschallschwingungen auf der reflektierenden Fläche des Schweissnahtdefekts 6 des Erzeugnisses 2 geändert wird. In diesem Falle sind die Winkel $\xi_1$ und $\xi_2$ einander gleich ($\xi_1 = \xi_2$), während der Winkel $2\delta$ aus der Beziehung

$$2\delta = 2 \arcsin \frac{1}{\sqrt{1 + \cos^2\alpha \cdot tg^2\xi}}$$

bestimmt wird.

Als Beispiel der Durchführung des Verfahrens wird im folgenden die Ermittlung eines als sphärische Pore auftretenden Defekts 6 (Fig. 6) in der Schweissnaht 4 eines aus Stahl hergestellten Erzeugnisses 2 für den Fall mit $\alpha = 35°$ betrachtet.

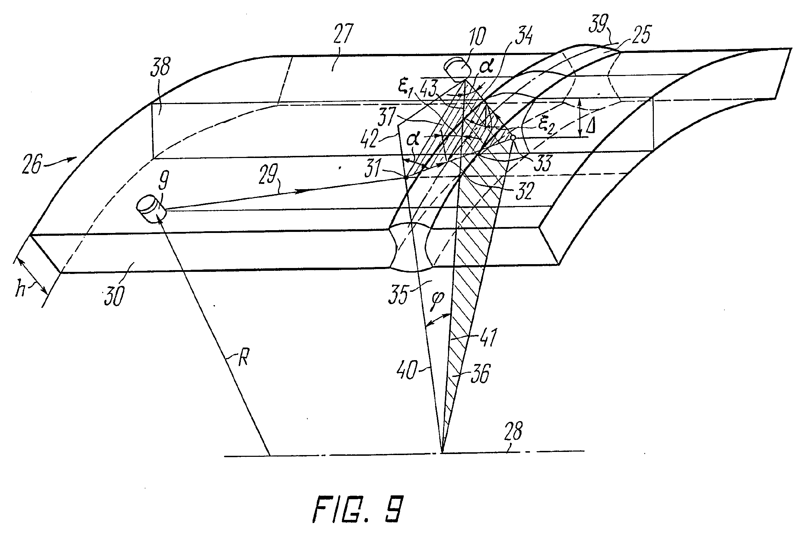

In Fig. 7 und 8 sind längs der Abszissenachse die Werte der Winkel $2\delta$ in Grad und auf der Ordinatenachse in Fig. 7 die Werte der Winkel $\xi_1 = \xi_2 = \xi$ in Grad aufgetragen. Auf der Ordinatenachse in Fig. 8 sind die Werte der Amplitude A der registrierten Ultraschall--Transversalschwingungen in dB aufgetragen.

Entsprechend der Kurve 23 (Fig. 7), welche den Zusammenhang zwischen $\xi$ und $2\delta$ für den angegebenen Wert von $\alpha$ beschreibt, und bei der Wahl des Winkels $\xi$ nach dem angemeldeten Verfahren im Bereich von $64° \leqslant \xi < 90°$, wird der Winkel $2\delta$ im Bereich von $0° \leqslant 2\delta \leqslant 60°$ gewählt. Dabei ist die Amplitude der horizontal polarisierten Komponente der auf die reflektierende Fläche des Schweissnahtdefekts 6 am Erzeugnis 2 einfallenden Transversalschwingungen wenigstens zweimal (um 6 dB) höher als die Amplitude der vertikal polarisierten Komponente. Folglich ist die Amplitude A der registrierten Ultraschall-Transversalschwingungen, wie dies die Kurve 24 (Fig. 8) zeigt, wesentlich grösser als die Amplitude der Ultraschall-Transversalschwingungen, die im Falle registriert werden, wenn $\xi = 30°$ ($2\delta = 130°$) ist. Was das Gebiet der Winkel $2\delta \geqq 130°$ betrifft, so liegt die Amplitude A der registrierten Schwingungen in diesem Gebiet nach Fig. 8 zwar ebenfalls um 6 dB und mehr höher, aber dieses Gebiet der Winkel $2\delta$ kann für die Kontrolle von Schweissnähten nicht benutzt werden, weil die Konfiguration der Schweissnaht 4 am Erzeugnis 2 die Realisierung solcher Winkelwerte von $2\delta$ zwischen den Polarisationsebenen 3 und 8 der ausgestrahlten und der registrierten Ultraschallschwingungen in diesem Falle nicht zulässt.

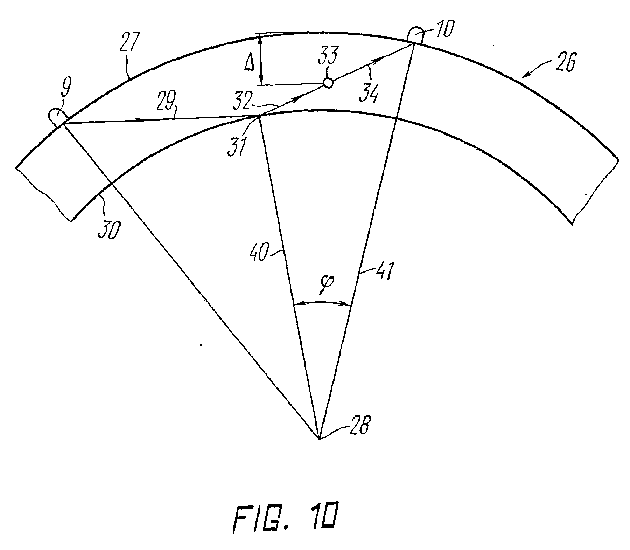

Eine weitere Variante der Durchführung des Verfahrens gemäss der Erfindung wird mittels der in Fig. 9 und 10 gezeigten Einrichtung für die Ultraschallkontrolle der Schweissnaht 25 eines Erzeugnisses 26, und zwar eines Rohres, realisiert. In diesem Falle wird das angemeldete Verfahren ähnlich dem mittels der Einrichtung nach Fig. 1 - 3 realisierten Verfahren durchgeführt.

Der Unterschied besteht darin, dass die Ultraschallwandler 9 (Fig. 9,10) und 10 an der zylindrischen Oberfläche 27 eines Erzeugnisses 26 angeordnet werden. Die zylindrische Oberfläche 27 (Fig. 9) wird durch einen Kreis mit dem Radius R gebildet, der von der Längsachse 28 des Rohres gezogen ist, wobei das Rohr eine Wanddicke h aufweist. Das Erzeugnis 26 wird als transparent angenommen.

Die ins Erzeugnis 26 (Fig. 9 und 10) mittels des Ultraschallwandlers 9 durch die zylindrische Oberfläche 27 des Erzeugnisses 26 eingestrahlten Ultraschall-Transversalschwingungen pflanzen sich in der Einstrahlungsrichtung 29 fort und gelangen nach Reflexion im Punkt 31 der gegenüberliegenden zylindrischen Innenfläche 30 des Erzeugnisses 26 längs der Richtung 32 auf die reflektierende Fläche des Defekts 33 in der Schweissnaht 25 des Erzeugnisses 26. Nach ihrer spiegelnden Reflexion an der reflektierenden Fläche des Defekts 33 breiten sich die Ultraschall-Transversalschwingungen in Richtung 34 der spiegelnden Reflexion aus und werden mittels des Ultraschallwandlers 10 registriert.

In Fig. 9 sind die Polarisationsebene der in die Schweissnaht 25 des Erzeugnisses 26 eingestrahlten Ultraschall-Transversalschwingungen, die Polarisationsebene der registrierten Ultraschall-Transversalschwingungen und die Einfallsebene dieser Schwingungen auf der reflektierenden Fläche des Defekts 33 in der Schweissnaht 25 des Erzeugnisses 26 mit den Bezugszeichen 35,36 bzw. 37 bezeichnet (die Ebenen 36 und 37 sind schraffiert).

Die Richtungen 29 und 34 der Einstrahlung der Ultraschall-Transversalschwingungen in die Schweissnaht 25 des Erzeugnisses 26 bzw. der spiegelnden Reflexion dieser Ultraschallschwingungen an der reflektierenden Fläche des Schweissnahtdefekts 33 am Erzeugnis 26 liegen in Übereinstimmung mit dem angemeldeten Verfahren, wie man aus Fig. 9 ersieht, ausserhalb der Ebene 38, die zur Längsachse 39 der Schweissnaht 25 am Erzeugnis 26 senkrecht liegt und durch die reflektierende Fläche des Defekts 33 hindurchgeht.

Im vorliegenden Falle wird der Winkel $2\delta$ zwischen den Polarisationsebenen 35 und 36 der ins Erzeugnis 26 einzustrahlenden bzw. der zu registrierenden Ultraschallschwingungen durch Anordnung der Ultraschallwandler 9 und 10 ausserhalb der Ebene 38 vorgegeben, wobei die Lage der Wandler 9 und 10 so gewählt wird, dass der Winkel $\varphi$ zwischen dem durch den Reflexionspunkt 31 der Ultraschallschwingungen an der zylindrischen Innenfläche 30 gezogenen Radiusvektor 40 und dem durch den registrierenden Ultraschallwandler 10 hindurchgehenden Radiusvektor 41 bei der in der Ebene der Zeichnung in Fig. 10 liegenden Projektion unter Berücksichtigung der Beziehung

$$\cos \varphi = f(\alpha, \Delta, h, R)$$

eingestellt wird. Dabei sind: $\alpha$ der Winkel zwischen der Richtung 32 der in die Schweissnaht 25 des Erzeugnisses 26 eingestrahlten Ultraschallschwingungen und der Normale 42 zur Oberfläche 27 des Erzeugnisses 26 im Punkt 31, wobei dieser Winkel dem Winkel $\alpha$ zwischen der Richtung 34 der spiegelnden Reflexion der Ultraschallschwingungen und der Normale 43 zur Oberfläche 27 des Erzeugnisses 26 im Punkt der Anordnung des registrierenden Ultraschallwandlers 10 gleich ist; und

$\Delta$ die Tiefenlage des Defekts 33 in der Schweissnaht 25 des Erzeugnisses 26.

Als Beispiel der Durchführung des angemeldeten Verfahrens wird im folgenden die Ermittlung eines Defekts 33 (Fig. 9) in der Art einer sphärischen Pore in der Schweissnaht 25 (Stumpfnaht) eines Erzeugnisses 26 und zwar eines Stahlrohres für den Fall mit $\alpha = 70°$ und mit einem Verhältnis der Wanddicke h zum Rohrradius R von $h/R = 0,1$ betrachtet, wobei R = 1420 mm ist.

In Fig. 11 sind längs der Ordinatenachse die Werte der Winkel $\xi_1 = \xi_2 = \xi$ in Grad und auf der Abszissenachse die Werte des Winkels $\varphi$ in Grad aufgetragen.

Die Kurve 44 zeigt, dass die Bedingungen $64° \leqslant \xi < 90°$ des angemeldeten Verfahrens im Bereich von $12° \leqslant \varphi < 53°$ realisiert werden. Dabei wird die Registrierung der horizontal polarisierten Komponente der Ultraschallschwingungen gewährleistet, die an der spiegelnden Fläche des Schweissnahtdefekts 33 am Erzeugnis 26 reflektiert werden, und dadurch wird die Zuverlässigkeit der Kontrolle der Schweissnaht 25 erhöht.

Das angemeldete Verfahren zur Ultraschallkontrolle von Schweissnähten an Erzeugnissen gewährleistet eine bessere Zuverlässigkeit und Glaubwürdigkeit der Kontrolle infolge der Erhöhung des Signal/Rausch-Verhältnisses um mindestens 6 dB. Das Verfahren ermöglicht die Kontrolle einer erweiterten Klasse von Erzeugnissen, darunter auch der Erzeugnisse mit Schweissverbindungen von geringer Dicke und mit stark gekrümmter Oberfläche. Dabei liegen die Amplituden der von Defekten reflektierten Signale nahe den theoretisch maximal möglichen, unabhängig von der Form des zu kontrollierenden Defekts.

Ausserdem gestattet das erfindungsgemässe Verfahren , die Form des erkannten Defekts mit hoher Genauigkeit zu bestimmen, d.h. die erkannten Defekte auf Grund der Ergebnisse der Ultraschallkontrolle in voluminöse und flächenhafte einzuteilen und im letzteren Fall ihre Orientierung zu ermitteln. Dies ist durch die Wahl von optimalen Richtungen der Defektbeschallung bedingt, wobei die Möglichkeit gegeben ist, die vom Defekt in verschiedene, Richtungen gestreuten Ultraschallschwingungen zu vergleichen.

Gewerbliche Anwendbarkeit

Die Erfindung kann in verschiedenen Industriezweigen, insbesondere im Maschinenbau, Schiffbau, im Maschinenbau für Kernkraftwerke, beim Bau von Kesseln sowie von Gas- und Erdölleitungen für die Ultraschallkontrolle von Schweissnähten einer breiten Klasse von Typen und Abmessungen benutzt werden.

PATENTANSPRÜCHE

1. Verfahren zur Ultraschallkontrolle von Schweissnähten an Erzeugnissen, bei dem zunächst die Richtung (1) der Einstrahlung von Ultraschall-Transversalschwingungen in ein Erzeugnis (2), die Polarisationsebene (3) der in die Schweissnaht (4) des Erzeugnisses (2) eingestrahlten Ultraschall-Transversalschwingungen, ihre Einfallsebene (5) auf der spiegelnden
Fläche des Defekts (6) in der Schweissnaht (4) am Erzeugnis (2), die Richtung (7) der spiegelnden Reflexion
dieser Schwingungen an der Reflexionsfläche des Schweissnahtdefekts (6) am Erzeugnis (2) und die Polarisationsebene (8) der nach der spiegelnden Reflexion an der
reflektierenden Fläche des Schweissnahtdefekts (6) registrierten Ultraschall-Transversalschwingungen bestimmt
werden, worauf man die Ultraschall-Transversalschwingungen in das Erzeugnis (2) periodisch einstrahlt
und die an der spiegelnden Fläche des Defekts (6) in
der Schweissnaht (4) reflektierten Ultraschall-Transversalschwingungen registriert, nach denen die geometrischen Parameter des Schweissnahtdefekts (6) beurteilt
werden, dadurch g e k e n n z e i c h n e t , dass die
Polarisationsebenen (3,8) der ins Erzeugnis (2) einzustrahlenden Ultraschall-Transversalschwingungen und
dieser nach der Reflexion an der spiegelnden Fläche des
Schweissnahtdefekts (6) am Erzeugnis (2) registrierten
Ultraschallschwingungen vor der periodischen Einstrahlung der Ultraschall-Transversalschwingungen ins Erzeugnis (2) in Bezug aufeinander unter einem vorgegebenen
Winkel $2\delta$ angeordnet werden, wobei man den Winkel $\xi_1$
zwischen der Polarisationsebene (3) der in die Schweissnaht (4) des Erzeugnisses (2) eingestrahlten Ultraschall-Transversalschwingungen und der Einfallsebene (5)
dieser Ultraschallschwingungen auf der reflektierenden
Fläche des Schweissnahtdefekts (6) sowie den Winkel $\xi_2$
zwischen der Polarisationsebene (8) der nach der Reflexion an der spiegelnden Fläche des Schweissnahtdefekts (6) am Erzeugnis (2) registrierten Ultraschall-
-Transversalschwingungen und der Einfallsebene (5) dieser Ultraschallschwingungen auf der reflektierenden
Fläche des Schweissnahtdefekts (6) gleich oder grösser
als 64°, aber kleiner als 90° wählt und dadurch die
Abtrennung der in Bezug auf die reflektierende Fläche
des Defekts (6) horizontal polarisierten Komponente
von den ausgestrahlten Ultraschall-Transversalschwingungen gewährleistet, wobei die geometrischen Parameter
des Defekts (6), nämlich seine geometrischen Abmessungen nach der Amplitude der horizontal polarisierten
Komponente und die Lage des Defekts (6) in der Schweissnaht (4) nach der Registrierungszeit dieser Komponente
beurteilt werden.

2. Verfahren zur Ultraschallkontrolle von Schweissnähten an Erzeugnissen nach Anspruch 1, dadurch g e -
k e n n z e i c h n e t , dass der Winkel 2𝛿 zwischen
den Polarisationsebenen (3,8) der in die Schweissnaht (4) des Erzeugnisses (2) eingestrahlten Ultraschall-Transversalschwingungen und diesen nach der Reflexion an der spiegelnden Fläche des Schweissnahtdefekts (6) am Erzeugnis (2) registrierten Ultraschallschwingungen bestimmt wird, indem die Richtungen (1,7)
der in das Erzeugnis (2) eingestrahlten Ultraschall-
-Transversalschwingungen und der spiegelnden Reflexion
dieser Ultraschallschwingungen an der reflektierenden
Fläche des Schweissnahtdefekts (6) am Erzeugnis (2)
ausserhalb der Ebene (13) gewählt werden, die zur Längsachse (14) der Schweissnaht (4) am Erzeugnis (2)
senkrecht liegt und durch die reflektierende Fläche
des Schweissnahtdefekts (6) hindurchgeht.

3. Verfahren zur Ultraschallkontrolle von Schweissnähten an Erzeugnissen nach Anspruch 2, dadurch g e -
k e n n z e i c h n e t , dass im Falle der Ultraschallkontrolle von Schweissnähten (4) an Erzeugnissen (2)
mit ebener Oberfläche (12), durch welche die Einstrahlung der Ultraschall-Transversalschwingungen ins Erzeugnis (2) erfolgt und diese Schwingungen nach ihrer Reflexion an der spiegelnden Fläche des Schweissnahtdefekts (6) am Erzeugnis (2) registriert werden, sowie mit einer dieser Oberfläche (12) entgegengesetzt liegenden Fläche (15) von beliebiger Form, der Winkel $\xi_1$ zwischen der Polarisationsebene (3) der in die Schweissnaht (4) des Erzeugnisses (2) eingestrahlten Ultraschall-Transversalschwingungen und der Einfallsebene (5) dieser Ultraschallschwingungen auf der reflektierenden Fläche des Schweissnahtdefekts (6) am Erzeugnis (2) sowie der Winkel $\xi_2$ zwischen der Polarisationsebene (3) der nach Reflexion an der spiegelnden Fläche des Schweissnahtdefekts (6) am Erzeugnis (2) registrierten Ultraschall-Transversalschwingungen und der Einfallsebene (5) dieser Ultraschallschwingungen auf dem Schweissnahtdefekt (6) einander gleich sind ( $\xi_1 = \xi_2 = \xi$ ) und der Winkel $2\delta$ zwischen den Polarisationsebenen (3,8) der in die Schweissnaht (4) des Erzeugnisses (2) eingestrahlten Ultraschall-Transversalschwingungen und dieser nach Reflexion an der spiegelnden Fläche des Schweissnahtdefekts (6) am Erzeugnis (2) reflektierten Ultraschallschwingungen in Übereinstimmung mit der Beziehung

$$2\delta = 2 \text{ arc cos } \frac{1}{\sqrt{1 + \cos^2\alpha \cdot \text{tg}^2\xi}}$$

oder

$$2\delta = 2 \text{ arc sin } \frac{1}{\sqrt{1 + \cos^2\alpha \cdot \text{tg}^2\xi}}$$

gewählt wird, wobei $\alpha$ den Winkel zwischen der Richtung (1) der Einstrahlung von Ultraschall-Transversalschwingungen ins Erzeugnis (2) und der Normale (16) zur erstgenannten Erzeugnisoberfläche (12) bedeutet, der gleich dem Winkel $\alpha$ zwischen der Richtung (7) der spiegelnden Reflexion dieser Ultraschallschwingungen an der reflektierenden Fläche des Schweissnahtdefekts (6) und der Normale (17) zur erstgenannten Oberfläche (12) des Erzeugnisses (2) ist.

FIG. 1

EP 0 382 844 A1

FIG. 2

FIG. 3

FIG. 4

FIG. 5

FIG. 6

EP 0 382 844 A1

FIG. 7

FIG. 8

FIG. 9

EP 0 382 844 A1

FIG. 10

FIG. 11

# INTERNATIONAL SEARCH REPORT

**I. CLASSIFICATION OF SUBJECT MATTER** (if several classification symbols apply, indicate all) *

According to International Patent Classification (IPC) or to both National Classification and IPC

IPC$^4$:  G 01 N 29/04

**II. FIELDS SEARCHED**

Minimum Documentation Searched [7]

| Classification System | Classification Symbols |
|---|---|
| IPC$^4$: | G 01 N 29/04 |

Documentation Searched other than Minimum Documentation
to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | US, A, 4289030 (ROCKWELL INTERNATIONAL CORPORATION) 15 September 1981, see the abstract | 1 |
| A | US, A, 4679437 (MITSUBISHI DENKI KABUSHIKI KAISHA) 14 July 1987, see the abstract & EP, A2, 177053, 9 April 1986 JP, A, 61-93952, 12 May 1986 | 1 |
| A | DE, A1, 2840456 (IBEMA ELEKTROTECHNIK UND MASCHINEN-BAU GmbH & Co. KG), 27 March 1980, see the abstract | 1 |
| A | GB, A, 2151786 (UNITED KINGDOM ATOMIC ENERGY AUTHO-RITY), 24 July 1985, see the abstract | 1 |
| A | JP, B2, 60-42415, 21 September 1985, see figure 1 | 1 |
| A | JP, B2, 60-44618, 4 October 1985, see figure 3 | 1 |
| A | SU, A1, 855487 (Moskovskoe vysshee tekhnicheskoe uchilische im. N.E. Baumana), 15 August 1981, see the claims (cited in the description) | 1 |
| A | SU, A1, 1067432 (Nauchno-proizvodstvennoe oleideninenie po tekhnologii mashinostroeniju TsNIITMASH), 15 January 1984, see the abstract | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 27 December 1988 (27.12.88) | 30 January 1989 (30.01.89) |

| International Searching Authority | Signature of Authorized Officer |
|---|---|
| ISA/SU | |